# EUROPEAN PATENT SPECIFICATION

(11) **EP 0 602 737 B1**
(45) Date of publication and mention of the grant of the patent: **23.07.1997**
(21) Application number: 93203488.7
(22) Date of filing: 11.12.1993
(51) Int. Cl.: B01F 13/10, G01N 35/10, G05D 11/13

(54) **Volumetric proportioner provided with a syringe, movable along two directions of a plane, and modular container baskets**
Proportional-Volumenmischer mit einer in zwei Richtungen in einer Ebene beweglichen Spritze und modulare Einsatzkörbe für Behälter
Mélangeur volumétrique proportionnel avec seringue mobile selon deux directions d'un plan et paniers modulaires pour récipients

(30) Priority: 15.12.1992 IT MI921064 U
(43) Date of publication of application: 22.06.1994
(73) Proprietor: ELETTROMECCANICA SALCE SAS, I-13014 Cossato (Vercelli) (IT)
(72) Inventor: Salce, Piero, I-13060 Valdengo ( Vercelli ) (IT)
(74) Representative: Michelotti, Giuliano

(56) References cited:
- EP-A- 0 454 040
- EP-A- 0 555 739
- GB-A- 2 146 619
- US-A- 4 967 933
- US-A- 5 055 263

## Description

The present invention regards a volumetric proportioner of the kind particularly used in the preparation of dye samples to be used in industrial dyeing of yarns and fabrics and, specifically, in the experimental preparation of the so-called "recipes" of dyes and is an improvement of a volumetric proportioner, usable for the same purpose, disclosed in EP-A-0 454 040 filed on 26 April 1991 in the name of the same Applicant of the present application.

In the above mentioned application is described a volumetric proportioner essentially consisting of a syringe movable between bottles containing, as ingredients, dye solutions and housed on a first rotatable pad, and beakers, receiving the solutions withdrawn by means of the syringe from the above mentioned bottles, and housed on a second rotatable pad, said syringe being cleanable by immersion in a cleaning assembly located between the first and the second rotatable pad.

Said invention works quite well as regards metering precision and operating speed.

However, it has an important limitation in the fact to be able to house just a restricted number of bottles and beakers, so that the number of dye "recipes" which can be subsequentely prepared with the solutions contained in the bottles housed in the first rotatable pad and the beakers present on the second pad.

An obvious remedy for such a limitation could be that of increasing the diameter of said first and second pads in order to allow the housing of a higher number of both bottles and beakers, however this increase is seriously limited by considerations of total encumbrances of the proportioner which must remain among reasonable limits.

It is a main object of the present invention to expand, in a volumetric proportioner of the kind disclosed in the above mentioned patent application, in a substantially unlimited way, the number of bottles and beakers served by the volumetric proportioner.

Another object of the present invention is carry out the above mentioned expansion by means of modules containing a maximum preset number of both bottles and beakers.

A further object of the present invention is to embody said modules in the form of baskets, provided with means for containing in substantially fixed way the beakers and/or the bottles, insertable in proper seats of a table forming a supporting and containing unit of the present volumetric proportioner.

The above mentioned objects are obtained by a volumetric proportioner according to the present invention consisting of a table housing in a first area thereof structures containing beakers and in a second area structures containing bottles, between said structures containing beakers and said structures containing bottles there being an area containing at least one cleaning unit, and of a syringe graduated, calibrated and controlled in order to drawn and supply preset volumes of liquid solutions, movable between said bottles and said beakers, whereby signalling means are provided to sense the coordinates corresponding to any bottle and any beaker, as well as to the at least one cleaning unit, and said syringe is movable between points whose coordinates are the same as the coordinates of any beaker and any bottle and of the at least one cleaning unit thereof, and both the beakers and the bottles are held in separate structures, which structures are integrally removable from said table.

Particularly, said movements of the syringe are provided by a bridge, spanning said table, moving along a first direction between the area of the bottles and the area of the beakers and vice versa, and by a carriage, carrying said syringe, moving along said bridge, being the syringe able to possibly stop, when it is necessary, at said cleaning unit.

Preferably, said bridge moves on a pair of rails, arranged along opposite sides of said table, and the carriage carrying the syringe is moved on a cross member of the bridge connecting the rails each other.

Particularly, the signalling members consist of proximity detectors sensing the proximity of reference members fastened on at least one of the rails and on the cross member.

More particularly, said proximity detectors are of magnetic kind, at least one of the rails and the cross member are of ferromagnetic material and the reference members are inserts of non magnetic material within said rail and cross member.

Still more particularly, the non magnetic reference members can be simple holes through said rail and cross member of magnetic material.

Conversely, said rail and cross member can be of non magmetic material and the reference members can be ferromagnetic inserts within them.

Alternatively, the proximity detectors can be reflexion opto-electronic detectors, the surfaces of said rail and cross member can be highly reflecting and the reference members can be not reflecting areas inserted in said rail and cross member.

In a preferred embodiment of the present invention, the bridge is provided with a motor for moving it along the rails, the carriage is also provided with a motor for moving it along the cross member of the bridge itself and the syringe is lowered into and raised from the intended vessels, as well as is actuated by motors connected to the carriage itself.

More preferably, the modular baskets for the beakers are more than one in number.

Also preferably, the bottles are assembled in at least one basket forming a modular bottle unit.

More preferably, the modular baskets for the bottles are more than one in number.

Particularly, the modular baskets for beakers are two in number and are inserted in two openings of the table supporting the proportioner in the area intended for the beakers.

Also particularly, the modular baskets for the bottles are variable in number from one to five and are inserted in proper equiped reentering seats of the supporting table.

The features of the present invention will be particularly specified in the claims forming the concluding part of this description. However other features and advantages of this invention will result from the following description of a particular and preferred embodiment thereof, not to be absolutely considered in a limiting way, provided with the enclosed drawings, in which:
- figure 1 is a view from above, with broken portions, for depicting purposes, of a volumetric proportioner of modular kind embodied in accordance with the principles of the present invention;
- figure 2 is a sectional view, partially broken away, taken along the line 2-2 in figure 1;
- figure 3 is a lateral elevation view of a modular basket for beakers usable in the present invention;
- figure 4 is a view in lateral elevation, partially broken away, of a modular basket for bottles also usable in the present invention.

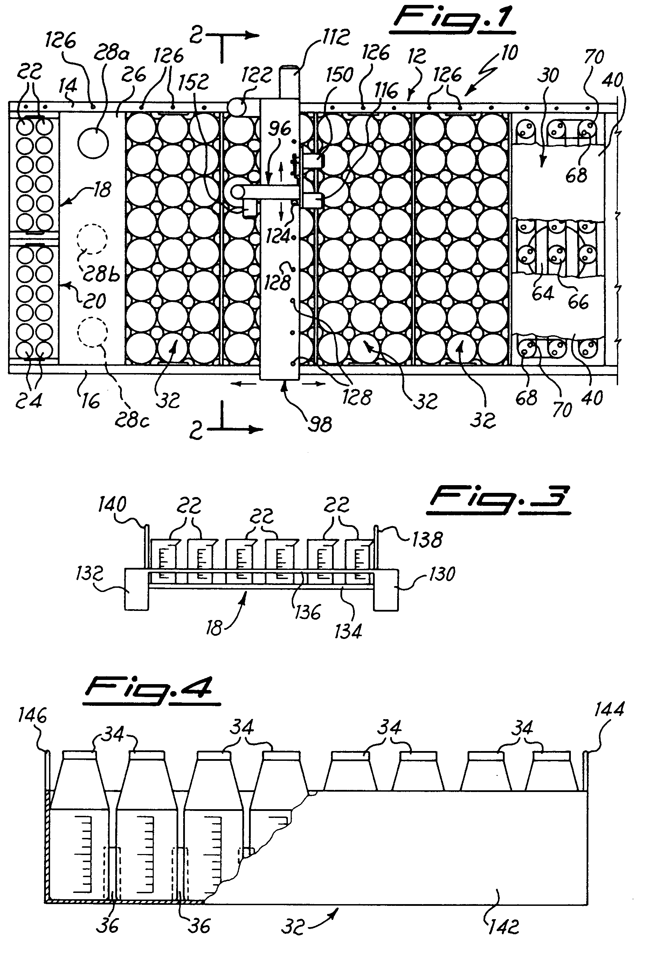

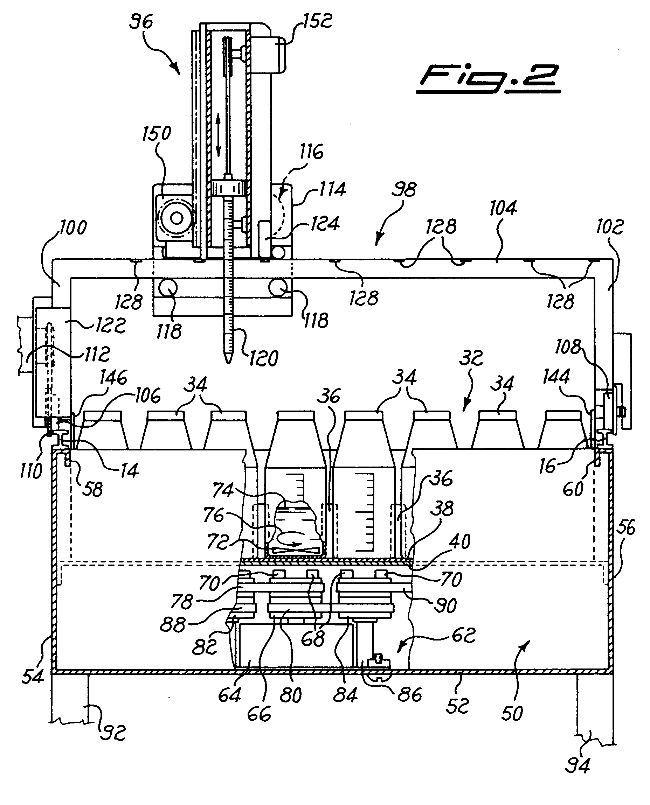

Looking at figures 1 and 2, it is seen that a volumetric proportioner 10 according to the present invention consists of a planar table 12 provided on two longer opposite sides with rails 14 and 16 and housing in succession modular baskets 18 and 20 containing beakers 22 and 24, a support plane 26 suited to house, either just one cleaning assembly 28a or, possibly,one or two further cleaning assemblies 28b and 28c, all formed by vessels, such as beakers, containing suitable solvents providing to the cleaning of a volumetric metering syringe of the kind already disclosed in the above mentioned European application and herebelow described in more details and, subsequentely, some recesses 30 in form of parallelepiped tubs (only one of them resulting well visible in figure 1) for housing modular baskets 32, remaining inserted between posts 36 fastened to the bottom 38 of the modular baskets themselves.

The walls of the recesses 30 can house devices for conditoning the solutions in the bottles 34, such as heaters and/or refrigerators controlled by thermostats or cryostats, respectively, while a bottom 40 thereof further to operate as a support for the modular baskets 32 themselves, can be equipped with magnetically coupled actuators for providing stirring and mixing to solutions within the bottles 34 themselves, as herebelow disclosed in more detail particularly referring to figure 2.

Referring to figure 2, it is seen that the table 12 comprises a metal sheet box 50 formed by a bottom 52 and two lateral walls 54 and 56 upwards terminated by edges 58 and 60 inside folded and supporting the two rails 14 and 16. The already mentioned bottom 40 divides the box 50 in an upper space, corresponding to the tub recesses 30, and a lower space 62 having the task of housing equipments such as for example heaters or refrigerators, or mechanical actuators for mixing and stirring liquid solutions into the bottles, such as the one visible both in figure 1 and 2 consisting, in particular of an electric motor 64 having connected to the shaft thereof a pulley 66 with two races, provided on the top with a pair of permanent magnets 68 and 70, justappointed under one of the bottles 34 housed in the modular basket 32, from where moves in rotation a stirrer 72 housed in the bottle 34 and consisting, as it is widely known in this art, of a small armature of ferromagnetic material, such as soft iron, suitably coated with a material inert and not reactive with respect to the solutions contained in the bottles 34, such as, for example polytetrafluoroethylene. The stirrer 72, by rotating into the liquid bulk 74 contained in the bottle 34, moves it according to the curved arrow 76, providing a continuous mixing of the liquid solution. The two races of the pulley 66 house two respective belts 78 and 80 transmitting the movement of the moving pulley 66 to two adjacent idle pulleys 82 and 84, respectively, freely rotating on fixed shafts, such as the fixed shaft 86 visible in figure 2, and also provided with pairs of permanent magnets 78 and 80 for transmitting movement to the respective stirrers in the adjacent bottles 34. Obviously, with the pulleys 82 and 84 can be engaged further transmission belts 88 and 90 transmitting the movement to as many pulleys as they are the bottles contained in any modular basket 32 for allowing the mixing of the solution contained in any bottle 34. As it is visible in figure 1, the pulleys are in number equal to the bottles houseable in any modular basket 32, allowing the mixing of the solutions contained in any bottle. It is to intend that, if it is not desired to mix a solution housed in a bottle, it is sufficient not to provide the bottle with the strirrer 72.

As visible in figure 2 and as can be obvious, the table 12 can be provided with legs such as uprights 92 and 94.

The means allowing the movement of a metering head 96 between the bottles 34 and the beakers 22 and 24 or between the beakers and the cleaning assemblies 28a-c are provided by a bridge 98 formed by two vertical uprights 100 and 102 connected by a cross member 104 and downwards provided with wheels 106 and 108 movable along the rails 14 and 16, where, for example, the wheel 106 is moved through some transmission means, such as a toothed belt or a chain 110, by a motor 112 fastened to the upright 100. The metering head 96 is substantially the same head described and claimed in the above mentioned European patent application to which reference is made for a detailed decription thereof. However, differently from that, is fastened, rather than to a rotatable shaft, to a carriage 114 which, by means of a motor 116 and wheels 118, is moved along the tranversal member 104 to be always aligned with one of the bottles 34, one of the beakers 22 or 24, or with the at least one cleaning assembly 28a.

The alignment position of the metering head 96 with respect to the bottles 34 or the beakers 22, 24 and specifically of a syringe 120 providing the requested volumetric metering occurs through control means directed by a microprocessor (not shown) actuating the two respective motors 112 and 116 and receives position information from two position sensors 122 and 124 detecting the position of the bridge 98 on the rail 14 and the position of the metering head 96 on the cross member 104, respectively, being said position sensors, for example, proximity detectors of magnetic kind sensing the magnetic permeability changement of the references 126 and 128 mounted on the rail 14 and the cross member 104, respectively.

For example, if the rail 14 and the cross member 104 are made of soft steel, the references 126 and 128 could be simple holes through them left empty o filled with a plug of not ferromagnetic material, such as a not magnetic metal or, still better, a plastic not magnetic and insulating material.

They can be taken into consideration, as position sensors 122 and 124, well known sensors based on other principles, such as for example, capacitive detectors sensing the electric capacity between their probes and said metallic rail 14 or cross member 104, sensing for example references 126 and 128 consisting of holes through the rail or the cross member themselves.

It would be obvious also the use of opto-electronic reflective sensors detecting the presence of optically dark references 126 and 128, such as through-holes or dark bottommed recesses on the rail 14 or the transverse member 104 of bright metal.

Looking now at the modular basket 18 for beakers, of course completely similar to the modular basket 20, it is seen that said basket 18 consists of two boards 130 and 132 each other connected by a support plane 134 and by a plate 136 provided with holes for housing the beakers 22, said boards 130 and 132 being provided with two handles 138 and 140 to allow an easy catching of the basket 18 for the movement thereof.

In a similar way, anyone of the modular baskets 32 for the bottles 34 consists of a box 142, open on the top, and provided with two handles 144 and 146 for its lifting and movement.

It is obvious that the modular baskets 18, 20 and 22 have to be easily movable in order to allow an easy substitution thereof in the proportioner according to the present invention.

The operation of the invention is the following:
when dye recipes are to be prepared through volumetric metering, one or more modular baskets 18 and/or 20 for beakers are placed on the left end area of the planar table 12 by lowering them in proper seats obviously provided on said table 12. One or more cleaning assemblies 28a-c are placed in the intermediate area between the place of the baskets 18 and 20 and the tub recesses 30 housing modular baskets 32 for bottles 34 of dyeing solutions. A number of baskets 32 are loaded in the recesses 30 (one to five in the case of the embodiment depicted in figure 1). Then the movable bridge 98 is moved to a preselected position corresponding to a modular basket and a row to which belongs the specific bottle 34 from which is to be taken a solution to be used in the recipe to be prepared. The particular modular basket and the row in the preselected basket are specified by data indicated by an electronic processor (not shown) and compared with position information along for example the rail 14 from the position sensor 122 sensing the references 126 placed on the rail 14 itself. In a similar way is selected the particular bottle 34 in the row of the preselected modular basket 32. It is just sufficient to move the metering head 96 to have the syringe 120 on the preselected bottle 34. To this purpose operates the above mentioned electronic processor with the help of the position sensor 124 sensing the references 128.

By means of a first motor 150, controlled by the processor, the piston obviously present in the syringe is lifted effecting a drawing of a desired volume of the solution from the bottle 34 into the syringe 120.

When a first dose of solution has been drawn by the syringe 120, according to a process already disclosed in the above mentioned European patent application, the syringe 120 is moved over the preselected of the beakers 22 or 24 into one of the modular baskets 18 or 20. To effect the movement of the syringe, the bridge 98 is moved to bring the syringe 120 itself over one of the rows of beakers 22 or 24, availing of the control of the above mentioned processor, the sensor 122 and the position references 126 corresponding to the preselected beaker row, then the metering head 96 is moved along the bridge 98 to bring the syringe 120 over the desired beaker, availing of the control of the electronic processor, the position sensor 124 and the position references 128 on the cross member 104 of the bridge 98 to bring the syringe 120 over the preselected of the beakers 22 or 24. At this point it is sufficient to lower, with the help of the motor 150, the syringe in the preselected beaker and drive with the help of the motor 152, driving the piston of the syringe, the emission of the desired volumetric solution dose in said beaker.

Should, after having provided the preselected beaker, it be necessary to clean the syringe, the bridge 98 is moved to bring the the syringe 120 over one of the cleaning assemblies 28a-c, always availing of the control of the processor, the position sensors 122 and 124 and the references 126 and 128. The syringe 120 is lowered into the preselected assembly 28a-c and, actuating the piston of the syringe, as much detersive liquid is passed into the syringe as it is sufficient to clean it. At this point after having discharged all the cleaning liquid, the proportioner is ready to resume its operation.

From the preceding disclosure it is understood that, among the highest advantages of the present invention, there is that of preparing a very high number of dye recipes without having to replace bottles 34 in their modular baskets 32, adding a number of modular baskets 32 to expand within large limits the proportioner according to the present invention, adding and/or removing in bulk preset bottle or beaker assemblies prepared or preset in a separated seat, reducing to a minimum the operating times on the volumetric proportioner itself.

What has been hereabove disclosed belongs to a preferred embodiment of the present invention given in an exemplifying and not limiting way, and those skilled in this specific art will be able to devise from the reading of the above description many equivalent approaches and embodiments without coming out from the scope of the present invention and thus said approaches and embodiments must be considered as here covered. For example, the position sensors 122 and 124 could be omitted by choosing for the motors 112 and 116 stepping motors properly controlled by the electronic processor. Also the number of beakers 22 or 24 or the number of bottles 34 in the modular baskets 32 can be different (higher or lower) from that indicated in the drawings whitout going out from the scope of the invention.

## Claims

1. Volumetric proportioner consisting of a table (12), housing in a first area thereof structures (18, 20) containing beakers (22, 24) and in a second area (30) structures (32) containing bottles (34), between said structures containing beakers (22, 24) and said structures containing bottles (34) there being an area containing at least one cleaning unit (28a-c), and of a syringe (120) graduated, calibrated and controlled in order to drawn and supply preset volumes of liquid solutions, movable between said bottles (34) and said beakers (22, 24), characterized in that signalling means (122, 124) are provided to sense the coordinates corresponding to any bottle (34) and any beaker (22, 24), as well as to the at least one cleaning unit (28a-c), and said syringe (120) is movable between points whose coordinates are the same as the coordinates of any beaker (22, 24) and any bottle (34) and of the at least one cleaning unit (28a-c) thereof, and both the beakers (22, 24) and the bottles (34) are held in separate structures (18, 20; 32), which structures are integrally removable from said table (12).

2. Volumetric proportioner, as in claim 1, characterized in that said movements of the syringe (120) are provided by a bridge (98), riding said table (12), which is moved in a first direction between the area of the bottles (34) and the area of the beakers (22, 24) and vice versa, and by a carriage (114), bringing said syringe (120), moving along said bridge (98), further allowing the syringe (120) possible stops, when necessary, by said cleaning unit (28a-c).

3. Volumetric proportioner, as in claim 2, characterized in that said bridge (98) is moved on a pair of rails (14, 16), arranged along opposed longer sides of said table (12), and the carriage (114) supporting the syringe (120) is moved on a cross member (104) of the bridge (98) connecting the rails (14, 16) to each other.

4. Volumetric proportioner, as in claim 3, characterized in that the signalling members consit of proximity detectors (122, 124) sensing the proximity of the reference members (126, 128) fastened on the at least one rail (14) and on the cross member (104).

5. Volumetric proportioner, as in claim 4, characterized in that the signalling members (122, 124) are of magnetic kind, the at least one rail (14) and the cross member (104) are of ferromagnetic material and the reference members (126, 128) are inserts of not magnetic material within the rail (14) and the cross member (104).

6. Volumetric proportioner, as in claim 4, characterized in that the not magnetic reference members (126, 128) can be simple holes through said rail (14) and cross member (104) of ferromagnetic material.

7. Volumetric proportioner, as in claim 4, characterized in that said rail (14) and cross member (104) can be of not magnetic material and the reference members (126, 128) can be inserts of ferromagnetic material thereinto enclosed.

8. Volumetric proportioner, as in claim 4, characterized in that the proximity detectors (122, 124) are reflexion opto-electronic sensors, the surfaces of said rail (14) and cross member (104) can be highly reflective and the reference members (126, 128) can be not reflective areas inserted into said rail (14) and cross memeber (104).

9. Volumetric proportioner, as in preceding claims, characterized in that the bridge (98) is provided with a motor (112) for moving it along the rails (14, 16), the carriage (114) is also provided with a motor (116) for moving it along the cross member (104) of the bridge (98) itself and the syringe (120) is lowered into and extracted from the vessels where is directed, as well as is actuated, by means of motors (150, 152) connected to the carriage (114) itself.

10. Volumetric proportioner, as in preceding claims, characterized in that the beakers (22, 24) are collected in at least one basket (18, 20) forming a beaker modular unit.

11. Volumetric proportioner, as in claim 10, characterized in that the modular baskets (18, 20) for the beakers (22, 24) are more than one in number.

12. Volumetric proportioner, as in claim 10, characterized in that the the bottles (34) are collected in at least one basket (32) forming a bottle modular unit.

13. Volumetric proportioner, as in claim 12, characterized in that the modular baskets (32) for the bottles (34) are more than one in number.

14. Volumetric proportioner, as in claim 13, characterized in that the modular baskets (18, 20) for the beakers (22, 24) are two in number and are inserted into two openings of the support table (12) of the proportioner in the area provided for the beakers.

15. Volumetric proportioner, as in claim 10, characterized in that the modular baskets (32) for the bottles (34) may variate in number from one to five and are inserted into proper recessed equipped seats (30) of the support table (12).

## Patentansprüche

1. Volumetrischer Zuteiler mit einem Tisch (12), der in einem ersten Bereich Becher (22, 24) umfassende Strukturen (18, 20) und in einem zweiten Bereich (30) Flaschen (34) umfassende Strukturen (32) aufnimmt, wobei zwischen den Bechern (22, 24) umfassenden Strukturen und den Flaschen (34) umfassenden Strukturen ein Bereich ist, der zumindest eine Reinigungseinheit (28a-c) umfaßt und mit einer Spritze (120), die skaliert, kalibriert und gesteuert ist, um vorgegebene Volumina von Flüssiglösungen aufzunehmen und abzugeben und zwischen den Flaschen (34) und den Bechern (22, 24) bewegbar ist,
dadurch **gekennzeichnet,** daß
eine Signaleinrichtung (122, 124) vorgesehen ist, um die sowohl jeder Flasche (34) und jedem Becher (22, 24) als auch der zumindest einen Reinigungseinheit (28a-c) entsprechenden Koordinaten zu fühlen, und die Spritze (120) zwischen Punkten bewegbar ist, deren Koordinaten die gleichen sind, wie die Koordinaten sowohl jedes Bechers (22, 24) und jeder Flasche (34) als auch der zumindest einen Reinigungseinheit (28a-c) und sowohl die Becher (22, 24) als auch die Flaschen (34) in getrennten Strukturen (18, 20; 32) gehalten sind, wobei die Strukturen einteilig von dem Tisch (12) entfernbar sind.

2. Volumetrischer Zuteiler nach Anspruch 1, dadurch gekennzeichnet, daß die Bewegungen der Spritze (120) durch eine über den Tisch (12) laufende Brücke (98), die in eine erste Richtung zwischen dem Bereich der Flaschen (34) und dem Bereich der Becher (22, 24) und umgekehrt bewegt wird und durch einen die Spritze (120) tragenden Träger (114) vorgesehen sind, der sich entlang der Brücke (98) bewegt und weiterhin der Spritze (120) mögliche Stillstände an der Reinigungseinheit (28a-c) erlaubt, falls notwendig.

3. Volumetrischer Zuteiler nach Anspruch 2, dadurch gekennzeichnet, daß die Brücke (98) auf einem Paar Schienen (14, 16) bewegt wird, die entlang gegenüber liegender, längerer Seiten des Tisches (12) angeordnet sind und der die Spritze stützende Träger (114) auf einem Querglied (104) der Brücke (98) bewegt wird, der die Schienen (14, 16) miteinander verbindet.

4. Volumetrischer Zuteiler nach Anspruch 3, dadurch gekennzeichnet, daß die Signaleinrichtung (122, 124) aus Näherungsfühlern (122, 124) besteht, die die Nähe von Referenzgliedern (126, 128) fühlen, die auf zumindest einer der Schienen (14) und auf dem Querglied (104) befestigt sind.

5. Volumetrischer Zuteiler nach Anspruch 4, dadurch gekennzeichnet, daß die Signaleinrichtung (122, 124) magnetischer Art ist und die zumindest eine Schiene (14) und das Querglied (104) aus ferromagnetischem Werkstoff und die Referenzglieder (126, 128) Einsätze aus nicht magnetischem Werkstoff innerhalb der Schiene (14) und dem Querglied (104) sind.

6. Volumetrischer Zuteiler nach Anspruch 4, dadurch gekennzeichnet, daß die nicht magnetischen Referenzglieder (126, 128) einfache Löcher durch die Schiene (14) und das Querglied (104) aus ferromagnetischem Werkstoff sein können.

7. Volumetrischer Zuteiler nach Anspruch 4, dadurch gekennzeichnet, daß die Schiene (14) und das Querglied (104) aus nicht magnetischem Werkstoff und die Referenzglieder (126, 128) darin enthaltene Einsätze aus ferromagnetischem Werkstoff sein können.

8. Volumetrischer Zuteiler nach Anspruch 4, dadurch gekennzeichnet, daß die Näherungsfühler (122, 124) optoelektronische Reflexionssensoren sind, die Oberflächen der Schiene (14) und des Quergliedes (104) hochreflektierend und die Referenzglieder (126, 128) in die Schiene (14) und das Querglied (104) eingesetzte, nicht reflektierende Bereiche sein können.

9. Volumetrischer Zuteiler nach vorhergehenden Ansprüchen, dadurch gekennzeichnet, daß die Brücke (98) mit einem Motor (112) versehen ist, um sie entlang der Schienen (14, 16) zu bewegen, der Träger (114) ebenfalls mit einem Motor (116) versehen ist, um ihn entlang des Quergliedes (104) der Brücke (98) selbst zu bewegen wobei die Spritze (120) in die Gefäße abgesenkt und aus ihnen herausgezogen wird, wohin sie durch mit dem Träger (114) selbst verbundenen Motoren (150, 152) gesteuert und wo sie betätigt wird.

10. Volumetrischer Zuteiler nach vorhergehenden Ansprüchen, dadurch gekennzeichnet, daß die Becher (22, 24) in zumindest einem Korb (18, 20) gesammelt sind, der eine modulare Bechereinheit bildet.

11. Volumetrischer Zuteiler nach Anspruch 10, dadurch gekennzeichnet, daß die Anzahl der modularen Körbe (18, 20) für die Becher (22, 24) größer als eins ist.

12. Volumetrischer Zuteiler nach Anspruch 10, dadurch gekennzeichnet, daß die Flaschen (34) in zumindest einem Korb (32) gesammelt sind, der eine modulare Flascheneinheit bildet.

13. Volumetrischer Zuteiler nach Anspruch 12, dadurch gekennzeichnet, daß die Anzahl der modularen Körbe (32) für die Flaschen (34) größer als eins ist.

14. Volumetrischer Zuteiler nach Anspruch 13, dadurch gekennzeichnet, daß zwei modulare Körbe (18, 20) für die Becher (22, 24) vorhanden sind und sie in zwei Öffnungen des Tragetisches (12) des Zuteilers eingesetzt sind, die in dem Bereich für die Becher vorgesehen sind.

15. Volumetrischer Zuteiler nach Anspruch 10, dadurch gekennzeichnet, daß die Anzahl der modularen Körbe (32) für die Flaschen (34) zwischen eins und fünf variieren kann und sie in angemessen ausgesparte, vorgesehene Sitze (30) des Tragetisches (12) eingesetzt sind.

## Revendications

1. Doseur volumëtrique constitué d'une table (12), logeant dans une première zone de celle-ci des structures (18, 20) contenant des gobelets (22, 24) et dans une deuxième zone (30) des structures (32) contenant des bouteilles (34), entre lesdites structures contenant les gobelets (22, 24) et lesdites structures contenant les bouteilles (34), se trouve une zone contenant au moins une unité de nettoyage (28a-c), et une seringue (120) graduée, calibrée et contrôlé afin de retirer et de tournir des volumes prédéterminés de solutions liquides, susceptible d'être déplacée entre lesdites bouteilles (34) et les dits gobelets (22, 24), caractérise en ce que des moyens de signalisation (122, 124) sont fournis afin de détecter les coordonnées correspondantes à toute bouteille (34) et tout gobelet (22, 24), ainsi qu'à au moins une unité de nettoyage (28a-c), et ladite seringue (120) est susceptible d'être déplacée entre des points dont les coordonnées sont les mêmes que les coordonnées de tout gobelet (22, 24) et de toute bouteille (34) et d'au moins une unité de nettoyage (28a-c) de ceux-ci, et les gobelets (22, 24) et les bouteilles (34) sont tous les deux contenus dans des structures séparées (18, 20; 32), les structures sont intégralement susceptibles d'être enlevées de ladite table (12).

2. Doseur volumétrique selon la revendication 1, caractérisé en ce que lesdits déplacements de la seringue (120) sont fournis par un pont (98), se déplaçant sur ladite table (12), qui est déplacé suivant une première direction entre la zone des bouteilles (34) et la zone des gobelets (22, 24) et vice versa, et par un chariot (114) portant ladite seringue (120), se déplaçant le long dudit pont (98), permettant en autre la seringue (120) de possibles arrêts, lorsque cela est nécessaire, par l'unité de nettoyage (28a-c).

3. Doseur volumétrique selon la revendication 2, caractérisé en ce que ledit pont (98) est déplacé sur une paire de rails (14, 16), agencés le long des cotés opposés les plus longs de ladite table (12), et le chariot (114) supportant la seringue (120) est déplacé sur un organe transversal (104) du pont (98) liant les rails (14, 16) l'un avec l'autre.

4. Doseur volumétrique selon la revendication 3, caractérisé en ce que les organes de signalisation sont constitués de détecteurs de proximité (122, 124) détectant la proximité des organes de référence (126, 128) fixés sur au moins un rail (14) et sur l'organe transversal (104).

5. Doseur volumétrique selon la revendication 4, caractérisé en ce que les organes de signalisation (122, 124) sont de type magnétique, au moins le rail (14) et l'organe transversal (104) sont en matériau ferromagnétique et les organes de référence (126, 128) sont des inserts en matériau non magnétique dans le rail (14) et l'organe transversal (104).

6. Doseur volumétrique selon la revendication 4, caractérisé en ce que les organes de référence (126, 128) non magnétiques peuvent être de simples trous au travers dudit rail (14) et de l'organe transversal (104) en matériau ferromagnétique.

7. Doseur volumétrique selon la revendication 4, caractérisé en ce que ledit rail (14) et l'organe tranversal (104) peuvent être réalisés en un matériau non magnétique et les organes de référence (126, 128) peuvent être des inserts en matériau ferromagnétique enclos à l'intérieur de ceux-ci.

8. Doseur volumétrique selon la revendication 4, caractérisé en ce que les détecteurs de proximité (122, 124) sont des détecteurs opto-électroniques à réflexion, les surfaces du rail (14) et de l'organe transversal (104) peuvent être hautement réflectives et les organes de référence (126, 128) peuvent ne pas être des surfaces réflectives insérées dans le rail (14) et l'organe transversal (104).

9. Doseur volumétrique selon les revendications précédentes, caractérisé en ce que les le pont (98) est doté d'un moteur (112) prévu pour le déplacer le long des rails (14, 16), le chariot (114) est aussi doté d'un moteur (116) prévu pour le déplacer le long de l'organe transversal (104) du pont (98) lui même, et la seringue (120) est abaissée dans est retirée des récipients vers lesquels elle est dirigée, ainsi qu'elle est actionnée au moyen de moteurs (150, 152) reliés au chariot (114) lui même.

10. Doseur volumétrique selon les revendications précédentes, caractérisé en ce que les gobelets (22, 24) sont récupérés au moins dans un panier (18, 20) formant une unité modulaire de gobelets.

11. Doseur volumétrique selon la revendication 10, caractérisé en ce que les paniers modulaires (18, 20) pour les gobelets (22, 24) sont en nombre supérieur à un.

12. Doseur volumétrique selon la revendication 10, caractérisé en ce que les bouteilles (34) sont récupérées dans au moins un panier (32) formant une unité modulaire de bouteilles.

13. Doseur volumétrique selon la revendication 12, caractérisé en ce que les paniers modulaires (32) pour les bouteilles (34) sont en nombre supérieur à un.

14. Doseur volumétrique selon la revendication 13, caractérisé en ce que les paniers modulaires (18, 20) pour les gobelets (22, 24) sont au nombre de deux et sont insérés dans deux ouvertures de la table de support (12) du doseur dans la zone fournie pour les gobelets.

15. Doseur volumétrique selon la revendication 10, caractérisé en ce que les paniers modulaires (32) pour les bouteilles (34) sont variables en nombre allant de un à cinq et sont insérés dans des logements (30) équipés d'évidements appropriés de la table de support (12).
